# EUROPEAN PATENT APPLICATION

(11) **EP 1 796 129 A1**
(43) Date of publication of application: **13.06.2007**
(21) Application number: 05790470.8
(22) Date of filing: 28.09.2005
(51) Int. Cl.: H01J 31/15

(54) **CONTACT DETECTIING FUNCTION-CARRYING DISPLAY UNIT**

(30) Priority: 30.09.2004 JP 2004287173
(71) Applicant: Touch Panel Systems K.K., Yokohama-shi, Kanagawa 222-0033 (JP)
(72) Inventor: TSUMURA, Masahiro, Touch Panel Systems K.K., Yokohama-shi, Kanagawa 222-0033 (JP)
(74) Representative: Johnstone, Douglas Ian
(86) International application number: PCT/JP2005/018388
(87) International publication number: WO 2006/035994

(57) **Abstract**

Transducers (10, 80) that function as an acoustic wave generating means and a detecting means of an acoustic wave type contact detecting device (ultrasonic touch panel) are integrally formed on a glass substrate 2, which is employed as a display surface of a display section 3. A piezoelectric element 10 that constitutes the transducer, and conductive wires (54a, 54b) for connecting the piezoelectric element 10 with a controller that functions as a control means are also integrally formed on the substrate 2. The substrate 2 is utilized both as the display section 3 and a contact detecting device. Thereby, a display apparatus having a contact detecting function, in which deterioration of image quality and poor operability do not occur, and that functions stably as a display apparatus, can be realized.

## Description

### Technical Field

The present invention relates to a display apparatus having an acoustic contact detecting function, such as an ultrasonic touch panel that acoustically detects contact positions.

### Background Art

Ultrasonic acoustic wave contact detecting apparatuses are in widespread use. Examples of their applications include operating screens of personal computers, ticket dispensers at train stations, copiers installed in convenience stores, and ATM's at financial institutions. These acoustic wave contact detecting apparatuses utilize transducers, including piezoelectric elements provided on a substrate (touch panel) formed of glass or the like. These transducers function both as generating means for acoustic waves and as sensors for detecting acoustic waves which are scattered by a finger or the like that contacts the touch panel. The transducers are connected to a control circuit, which is a controller, via conductive wires.

The substrates of the contact detecting apparatuses, on which the transducers are provided, are commonly provided to overlap the screens of display devices, such as CRT's (refer to, for example, Japanese Unexamined Patent Publication No. 11(1999)-65795, Figure 5). Operators view the screen of the display device through the substrate, and perform input operations by touching the substrate with their fingers or the like, with the sense that they are pressing icons displayed on the screen.

In this case, however, the substrate of the contact detecting apparatus is placed on the screen of the display device. Therefore, the transmittance of light emitted from the display screen is decreased, and problems of image quality deterioration, such as images displayed thereon becoming dark and difficult to see, occur. In addition, a space of at least approximately 2.8mm is formed between the screen of the display device and the surface of the substrate of the contact detecting apparatus. Therefore, operators do not sense that they are directly touching the display screen, which may cause poor operability.

Meanwhile, an FED (Field Emission Display), in which a thin glass plate itself is employed as a touch panel, has been proposed (for example, refer to Figures 1, 2, and 4 of Japanese Unexamined Patent Publication No. 9(1997)-134685). The thin glass plate at the surface of the FED is imparted with flexibility, and contact positions are detected by electrically ascertaining deformation of the thin glass plate due to contact. In this FED, a separate touch panel (substrate) is not mounted onto the thin glass plate, which is the display screen. Therefore, deterioration in image quality does not occur.

In the above FED that employs the thin glass plate as the touch panel, the thin glass plate is flexible. Therefore, when operators touch the screen, the distance between emitters and phosphors of the FED varies, which may be detrimental to the stability of emission. In addition, the hermetically sealed state of the interior of the FED may be compromised by deformation of the thin glass plate. That is, there is a problem that the FED lacks stability in function as a display device.

The present invention has been developed in view of the foregoing circumstances. It is an object of the present invention to provide a display apparatus having a contact detecting function in which deterioration of image quality and poor operability do not occur, that functions stably as a display apparatus.

### Disclosure of the Invention

The display apparatus having a contact detecting function of the present invention comprises:
a display section that employs a transparent substrate, on the surface of which acoustic waves propagate, as a display surface;
an acoustic wave generating section, for generating acoustic waves based on input electrical signals;
a detecting section for detecting the acoustic waves that change according to contact positions of objects with respect to the surface and for outputting electrical detection signals;
a control section; and
conductive wires for connecting the acoustic wave generating section, the detecting section, and the control section; wherein:
   the acoustic wave generating section, the detecting section, and the conductive wires are provided on the substrate such that they are integrated therewith.

Here, "acoustic waves" include surface acoustic waves that propagate along the surface of the substrate.

The "acoustic wave generating section" may comprise a piezoelectric element; and the "detecting section" may comprise a grating. Alternatively, the "acoustic wave generating section" may comprise a piezoelectric element; and the "detecting section" may comprise a pair of comb electrodes.

The display section may be either a field emission display (FED) or a vacuum fluorescent display (VFD).

The display apparatus having a contact detecting function of the present invention may further comprise:
reflective arrays for causing the generated acoustic waves to propagate along the surface of the substrate.

The "reflective arrays" may be formed by sintering glass paste, or by etching.

The "control section" may input the electrical signals into the acoustic wave generating section, and may detect the contact position, based on the electrical detection signals received from the detecting section.

According to the display apparatus having a contact detecting function of the present invention, the components of a device having the acoustic wave type contact detecting function except for the control section are integrated with the substrate, which is employed as the display screen of the display section. That is, the substrate is utilized jointly by the display section and the contact detecting device. Therefore, the necessity of providing a substrate of a contact detecting device such that it overlaps the display screen of a display device is obviated. Thereby, deterioration in image quality and poor operability do not occur. In addition, because the contact detecting device is of the acoustic wave type, it is not necessary for the display screen to be flexible, resulting in stable functioning as a display apparatus.

### Brief Description of the Drawings

Figure 1 is a front view of a display section 3 of a display apparatus 1a having a contact detecting function.
Figure 2 is a partial magnified view of the display section of the display apparatus 1a.
Figure 3 is a front view of a display section 3 of a display apparatus 1a' having a contact detecting function.
Figure 4 is a partial magnified view of the display section of the display apparatus 1a'.
Figure 5 is a front view of a display section 3 of a display apparatus 1b.
Figure 6 is a partial magnified view of the display section of the display apparatus 1b.
Figure 7A and Figure 7B are magnified front views of a pair of comb electrodes 54a and 54b, and piezoelectric elements 10 which are fixed on the electrodes.
Figure 8 is a partial magnified view of a display section 3 of a display apparatus 1c.
Figure 9 is a partial magnified view of a display section 3 of a display apparatus 1d.

### Best Mode for Carrying Out the Invention

Hereinafter, preferred embodiments of the display apparatus having a contact detecting function (hereinafter, simply referred to as "display apparatus") of the present invention will be described with reference to the attached drawings.

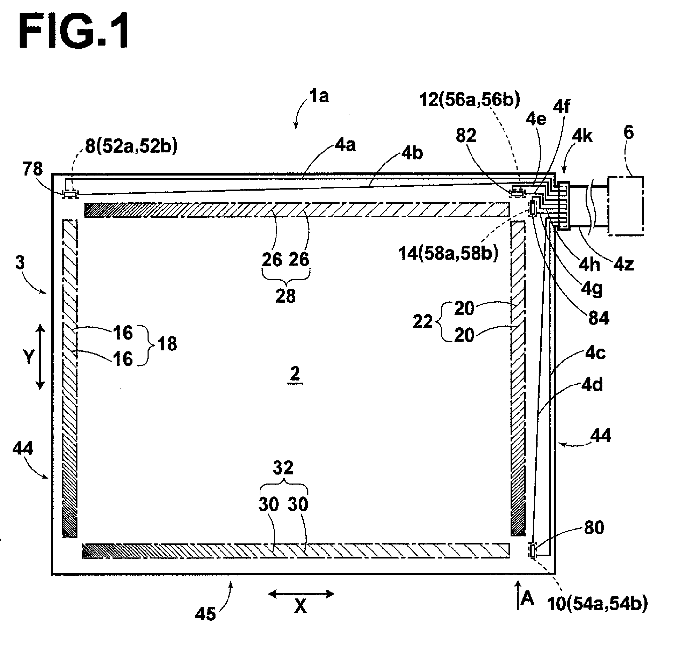

Figure 1 is a front view of a display section 3 of a display apparatus 1a. As illustrated in Figure 1, the display section 3 is an FED type display having a rectangular glass substrate 2 as its display screen, and comprises: the glass substrate 2; a cable assembly 4z (conductive wires); and a controller 6 (control section), which is electrically linked to the cable assembly 4z.

The glass substrate 2 is made from soda lime glass having a thickness of 2.8mm. Soda lime glass does not deform easily, and is suited for propagation of surface acoustic waves (acoustic waves).

Piezoelectric elements 8 and 10, which are vibrators for generating bulk waves (ultrasonic vibrations), and piezoelectric elements 12 and 14, which are sensors for detecting bulk waves, are connected to the cable assembly 4z via conductive wires 4a through 4h, which are provided on the glass substrate 2.

A reflective array 18, comprising a great number of inclined lines 16, is formed along the Y axis on the front surface of the substrate 2, in the vicinity of one lateral edge 44 thereof. A reflective array 22, comprising a great number of inclined lines 20, is formed to face the reflective array 18, at the other lateral edge 44 of the substrate. A reflective array 28, comprising a great number of inclined lines 26, is formed along the X axis in the vicinity of the upper edge 24 of the substrate 2. A reflective array 32, comprising a great number of inclined lines 30, is formed to face the reflective array 28, in the vicinity of the lower edge 45 of the substrate. The patterns of these reflective arrays 18, 22, 28, and 32 are those disclosed in Japanese Unexamined Patent Publication Nos. 61 (1986)-239322 and 2001-14094. Note that the reflective arrays 18, 22, 28, and 32 are collectively referred to as a reflective array 33. The reflective array 33 reflects surface acoustic waves, and causes them to propagate along the front surface of the substrate 2.

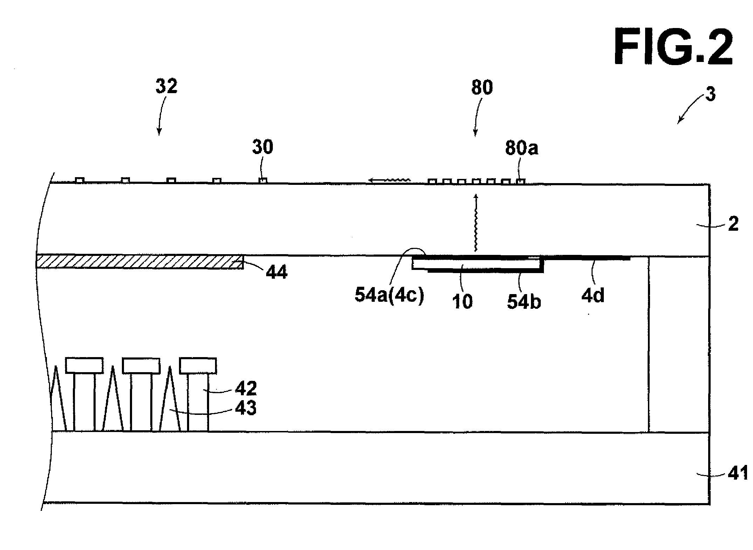

The piezoelectric elements 8, 10, 12, and 14 are provided on the rear surface of the substrate 2. Gratings 78, 80, 82, and 84 that function as mode converting elements are formed on the front surface of the substrate 2, at positions corresponding to the piezoelectric elements 8, 10, 12, and 14, respectively. This construction will be described with reference to Figure 2, taking the grating 80 as an example. Figure 2 is a partially magnified view of the display section 3 of Figure 1, viewed from the direction of arrow A. As illustrated in Figure 2, the display section 3 comprises the glass substrate 2, which functions as an anode glass substrate; a cathode glass substrate 41, which is provided parallel to the glass substrate 2 with a space therebetween; gate electrodes 42 and emitters 43, which are provided on the interior surface (front surface) of the cathode glass substrate 41; a phosphor layer 44, which is coated on the interior surface (rear surface) of the glass substrate 2; the piezoelectric element 10 provided on the rear surface of the glass substrate 2; and the grating 80 and the reflective array 32, which are provided on the front surface of the glass substrate 2. Note that the gate electrodes 42, the emitters 43, and the phosphor layer 44 are provided within a display region of the display section 3, while the piezoelectric element 10, the grating 80, and the reflective array 32 are provided outside the display region. The grating 80 of Figure 2 is formed by sintering glass paste on the substrate 2 or by etching, and comprises a plurality of parallel ridges 80a. The ridges 80a shown in Figure 2 extend in the direction perpendicular to the surface of the drawing sheet.

The widths of the ridges 80a are set to be approximately 400µm, and the heights are set to be 35µm or greater. The direction in which the bulk waves are reflected is changed by varying the intervals among the ridges 80a. In the present embodiment, the ridges 80a are formed with intervals that cause surface acoustic waves to be generated directly beside the ridges 80a. The conductive wire 4c, having an electrode portion 54a at an end thereof, is screen printed by conductive material on the rear surface of the glass substrate 2 opposite the grating 80. The piezoelectric element 10 is adhesively attached to the electrode portion 54a, and the conductive wire 4d, having an electrode portion 54b at an end thereof, is screen printed from above the piezoelectric element 10.

The other gratings 78, 82, and 84 and the piezoelectric elements 8, 12, and 14 have similar constructions. The conductive wire 4a having an electrode portion 52a at one end and the conductive wire 4b having an electrode portion 52b at one end are screen printed such that they are connected to the piezoelectric element 8. The conductive wire 4e having an electrode portion 56a at one end and the conductive wire 4f having an electrode portion 56b at one end are screen printed such that they are connected to the piezoelectric element 12. The conductive wire 4g having an electrode portion 58a at one end and the conductive wire 4h having an electrode portion 58b at one end are screen printed such that they are connected to the piezoelectric element 14. The conductive wires 4a through 4h are provided on the glass substrate 2 such that they do not intersect each other. The ends of the conductive wires 4a through 4h which are opposite the ends connected to the piezoelectric elements are gathered at an external connecting section 4k at a predetermined location on the glass substrate 2. The external connecting section 4k is a card edge connector, and the cable assembly 4z is connected to the conductive wires 4a through 4h via the card edge connector 4k.

Of the gratings 78, 80, 82, and 84, the gratings denoted by reference numerals 78 and 80 convert bulk waves generated by the transmission side piezoelectric elements 8 and 10 into surface acoustic waves. Meanwhile, the gratings 82 and 84 convert the surface acoustic waves, which have propagated along the front surface of the substrate 2, back into bulk waves. That is, the acoustic wave generating means and the detecting means of the present invention are constituted by combinations of the piezoelectric elements and the gratings. The controller 6 inputs excitation electrical signals to cause the piezoelectric elements 8 and 10 to vibrate, and also receives electrical signals (electric detection signals) from the piezoelectric elements 12 and 14, via the cable assembly 4z.

The piezoelectric element 10 generates ultrasonic vibrations (bulk waves) at a frequency of approximately 5.5MHz. The ultrasonic vibrations travel through the interior of the substrate 2 from the rear surface thereof, and reach the grating 80. The grating 80 converts the ultrasonic vibrations to surface acoustic waves, which are propagated (reflected) perpendicular to the ridges 80a, toward the reflective array 32. The surface acoustic waves are reflected by the inwardly inclined lines 30 of the reflective array 32 and propagate along the front surface of the substrate 2 toward the reflective array 28 until they reach the inwardly inclined lines 26.

The surface acoustic waves that reach the reflective array 28 are reflected thereby to propagate toward the grating 84. The surface acoustic waves that reach the grating 84 are converted to bulk waves thereby. The converted bulk waves propagate to the piezoelectric element 14 on the rear surface of the glass substrate 2, which senses and converts the vibrations thereof to electrical signals.

In a similar manner, the ultrasonic vibrations (bulk waves) generated by the piezoelectric element 8 are converted to surface acoustic waves by the grating 78. Then, the surface acoustic waves reach the mode grating 82 via the reflective array 18 and the reflective array 22. The surface acoustic waves are converted to bulk waves by the grating 82 and propagate to the piezoelectric element 14, which senses and converts them to electrical signals.

In this manner, the surface acoustic waves are propagated across the entire region of the front surface of the substrate 2 covered by the reflective arrays 18, 22, 28, and 32. Therefore, if an object such as a finger contacts (touches) the substrate 2 within this region, the surface acoustic waves blocked by the finger disappear or are attenuated. The signal change accompanying the change in the surface acoustic waves is transmitted from the piezoelectric elements 12 and 14, which function as sensors, to a timing circuit (not shown) of the controller 6 connected thereto. The controller 6 determines the geometric coordinates of the position touched by the finger.

The surface acoustic waves are reflected by each of the inclined lines 16, 20, 26, and 30 of the reflective array 33. 0.5% to 1% of the surface acoustic waves that reach each of the inclined lines are reflected thereby. The remainder passes through and is transmitted to the adjacent inclined line, so that all of the inclined lines sequentially reflect the surface acoustic waves.

According to the display apparatus 1a having a contact detecting function of the present embodiment, the components of a device having the acoustic wave type contact detecting function except for the controller 6 are integrated with the glass substrate 2, which is employed as the display screen of the display section 3. That is, the glass substrate 2 is utilized jointly by the display section 3 and the contact detecting device. Therefore, the necessity of providing a substrate of a contact detecting device such that it overlaps the display screen of a display device is obviated. Thereby, deterioration in image quality and poor operability do not occur. In addition, because the contact detecting device is of the acoustic wave type, it is not necessary for the display screen to be flexible, resulting in stable functioning as a display apparatus. Further, because the display section 3 is a field emission display type, it is possible to form the display section to be thin, compared to those of a CRT type.

Note that if a drive circuit (not shown) of the controller 6 for the contact detecting device is mounted onto the same substrate, further miniaturization and cost reductions are possible.

The present embodiment has been described as an example in which the gratings 78, 80, 82, and 84 are employed as a grating type surface acoustic wave generating (detecting) means (transducers). However, the present invention is not limited to this embodiment.

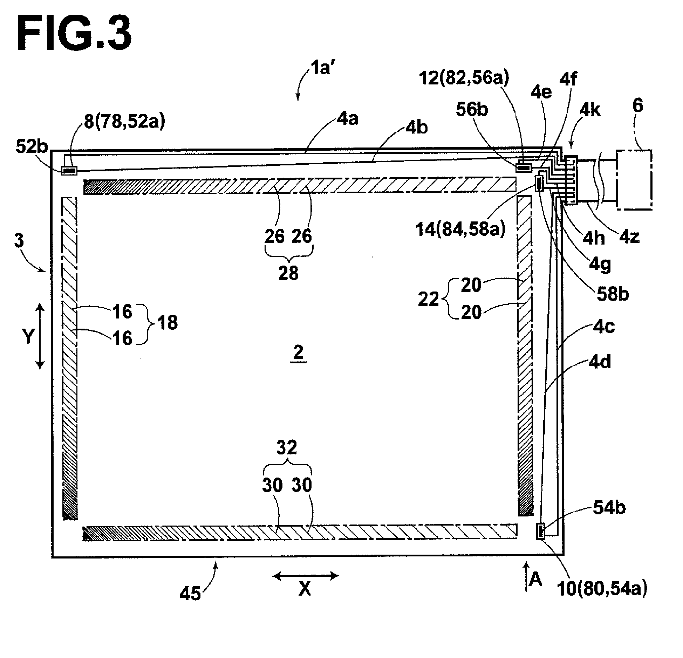

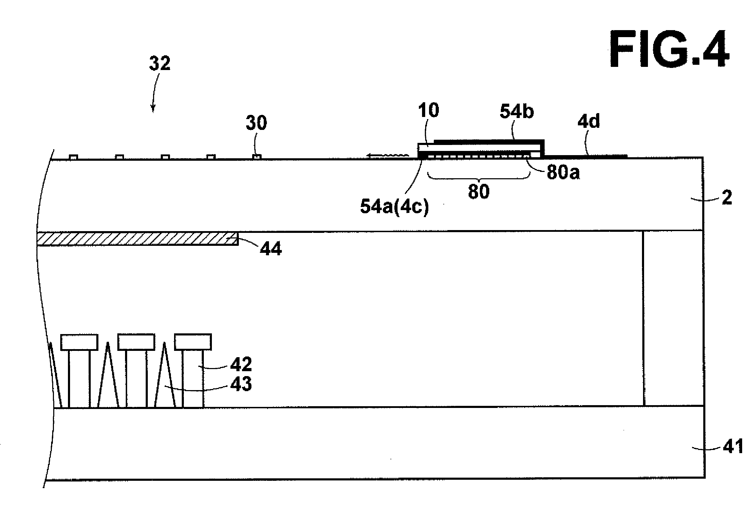

For example, an alternate configuration that employs the same grating type transducers may be considered, in which the piezoelectric elements 8, 10, 12, and 14 are provided on the front surface of the glass substrate 2 instead of on the rear surface thereof. Figure 3 is a front view of a display section 3 of a display apparatus 1a' that employs grating type transducers, in which piezoelectric elements are provided on the front surface of a glass substrate 2. Figure 4 is a partially magnified view of the display section 3 of Figure 3, viewed from the direction of arrow A. In this embodiment, a conductive wire 4c having an electrode portion 54a at one end is screen printed on a grating 80, a piezoelectric element 10 is adhesively attached thereon, and a conductive wire 4d having an electrode portion 54b at one end is screen printed on the piezoelectric element 10.

As a further alternative, transducers constituted by wedge type converters that utilize acrylic prisms may be employed. As a still further alternative, transducers constituted not by gratings or wedges, but by pairs of comb electrodes and piezoelectric elements fixed thereon (hereinafter, referred to as "comb electrode type transducers") may be employed.

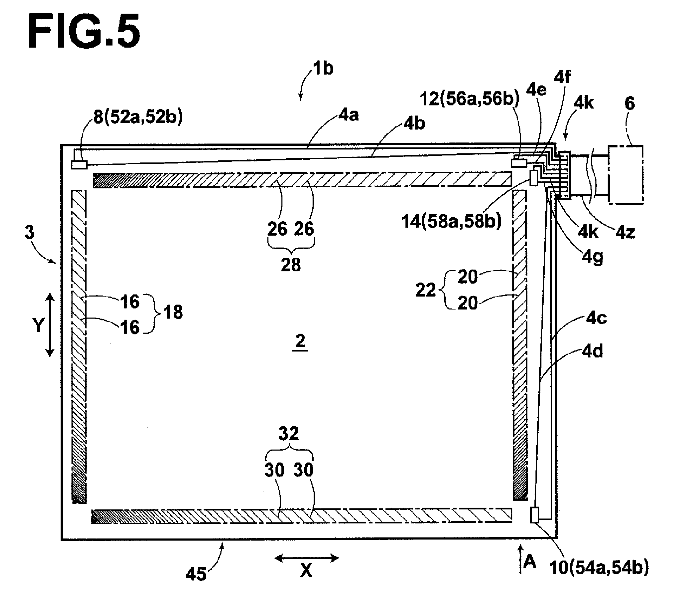

Figure 5 is a front view of a display section 3 of a display apparatus 1b that employs comb electrode type transducers. The display section 3 of Figure 5 is similar to the display section 3 illustrated in Figure 1 in overall shape. However, the display section 3 of Figure 5 lacks the gratings 78, 80, 82, and 84, and the piezoelectric elements 8, 10, 12, and 14 are not adhesively attached to the rear surface of the glass substrate 2. Instead, pairs of comb electrodes (52a, 52b), (54a, 54b), (56a, 56b), and (58a, 58b) are provided at the positions at which the gratings 78, 80, 82, and 84 are provided in the display section 3 of Figure 1. Piezoelectric elements 8, 10, 12, and 14 are fixed on each pair of comb electrodes, respectively.

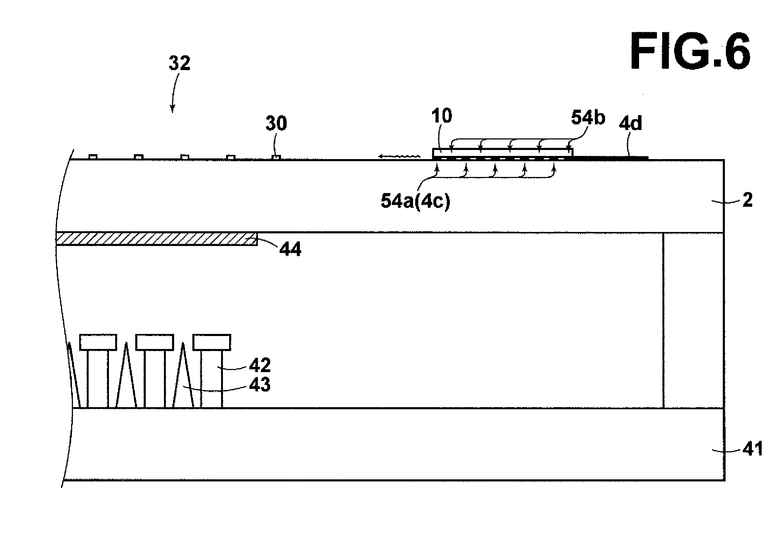

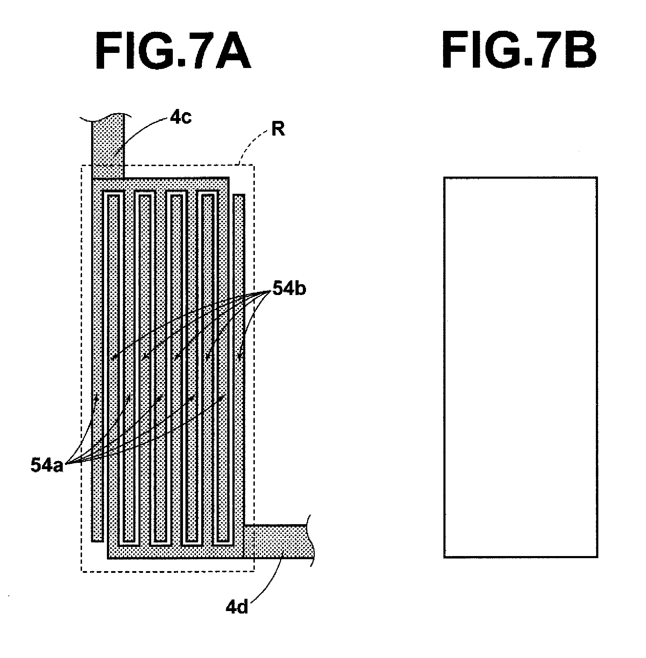

Figure 6 is a partially magnified view of the display section 3 of Figure 5, viewed from the direction of arrow A. The pair of comb electrodes 54a and 54b are formed on the front surface of the glass substrate 2 by screen printing, and the piezoelectric element 10 is fixed thereon. Figure 7A is a magnified front view of the pair of comb electrodes 54a and 54b. Figure 7B is a magnified front view of the piezoelectric element 10 which is fixed on the comb electrodes 54a and 54b. The pair of comb electrodes 54a and 54b illustrated in Figure 7A are provided such that the "teeth" of each of the comb shapes enter the gaps between the "teeth" of the other comb shape. Note that the portion indicated by reference letter R is the portion of the comb electrodes 54a and 54b which is electrically connected to the piezoelectric element 10. Comb electrode type transducers generate surface acoustic waves by the vicinities of the comb electrode type transducers distorting and vibrating when electric signals having a predetermined frequency are input to the piezoelectric elements thereof, due to the piezoelectric effect thereof. The propagating properties of surface acoustic waves can be varied by changing the intervals, the numbers, and shapes of the "teeth" of the comb electrodes.

The display apparatus having a contact detecting function can be realized in a similar manner to that which employs grating type transducers, even in the case that the comb electrode type transducers are employed.

Note that each of the above embodiments have been described as cases in which the display sections are Field Emission Displays (FED's). Alternatively, the display section may be Vacuum Fluorescent Displays (VFD's).

In the case that VFD's are employed as the display section, a configuration in which grating type transducers are employed and a configuration in which comb electrode type transducers are employed may be considered.

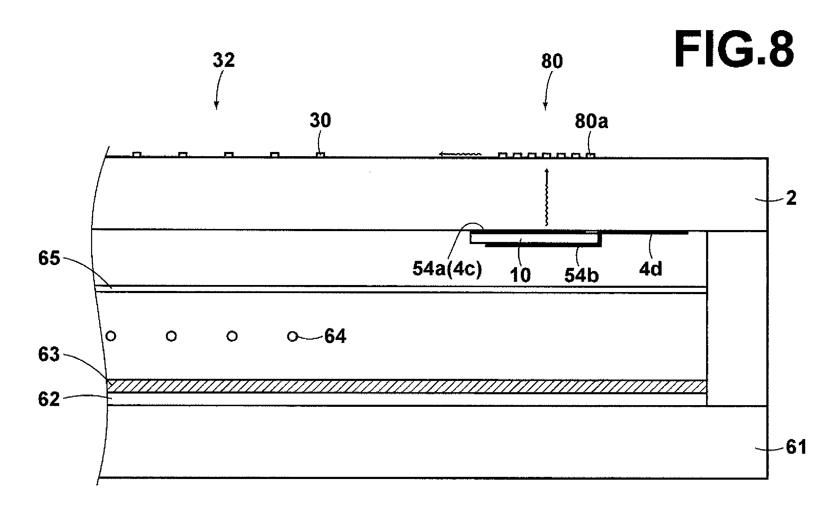

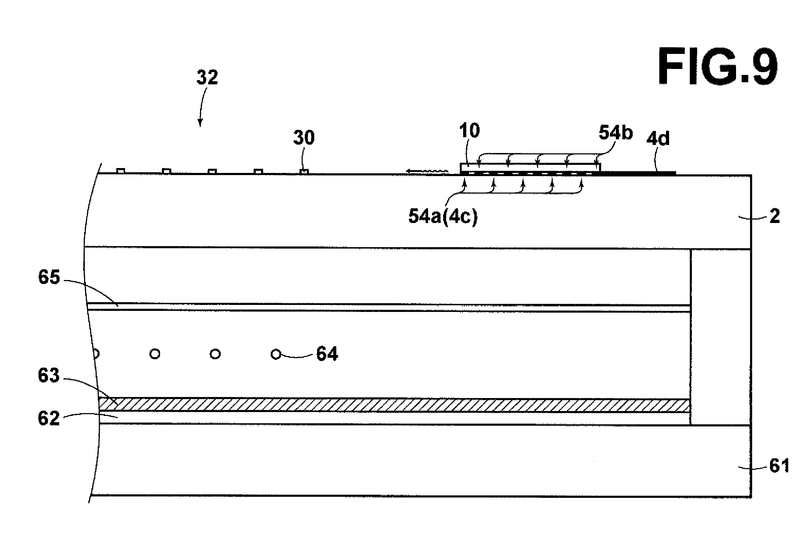

In the case that a VFD is employed as the display section and grating type transducers are employed, the front view of the display section 3 is the same as that illustrated in Figure 1 or Figure 3. In the case that a VFD is employed as the display section and comb electrode type transducers are employed, the front view of the display section 3 is the same as that illustrated in Figure 5. However, the interior structures of these display sections differ from those that employ FED's. Figure 8 is a partially magnified view of the display section 3 that employs a VFD and grating type transducers, viewed from the direction of arrow A. Figure 9 is a partially magnified view of the display section 3 that employs a VFD and comb electrode type transducers, viewed from the direction of arrow A. The structures of each of the transducers are the same as those employed in the display apparatuses that employ FED' s as display sections, and therefore detailed descriptions thereof will be omitted here. The VFD display section comprises: a glass substrate 2; a substrate 61, which is provided parallel to the glass substrate 2 with a space therebetween, an anode electrode 62 formed on the surface of the substrate 61; a phosphor layer 63 coated on the anode electrode 62; a plurality of wire grids 64, which are provided parallel to the substrate 61 and above the phosphor layer 63; and a plurality of wire cathode electrodes 65, which are provided parallel to the substrate 61 and above the wire grids 64 such that they extend perpendicular to the wire grids 64.

The display apparatus having a contact detecting function can be realized employing either grating type transducers or comb electrode type transducers, even in the case that VFD's are employed as the display section. In the case that VFD's are employed as the display section, display apparatuses having a contact detecting function can be realized at low cost, due to the construction of the VFD's.

Preferred embodiments of the present invention have been described above. However, the present invention is not limited to the above embodiments, and various modifications and changes are possible. For example, a single or a plurality of wave generating piezoelectric elements and detecting piezoelectric elements may be provided on each long side of an elongate FED or VFD, instead of providing the reflective array. Further, the controller 6 may be shipped in a state in which it is linked with the display apparatus, separated fro the display apparatus, or integrated with the display section.

## Claims

1. A display apparatus (1a-1d) having a contact detecting function, comprising:
a display section (3) that employs a transparent substrate (2), on the surface of which acoustic waves propagate, as a display surface;
an acoustic wave generating section (8, 10, 78, 80), for generating acoustic waves based on input electrical signals;
a detecting section (12, 14, 82, 84) for detecting the acoustic waves that change according to contact positions of objects with respect to the surface and for outputting electrical detection signals;
a control section (6); and
conductive wires (4a-4h, 4z) for connecting the acoustic wave generating section (8, 10, 78, 80), the detecting section (12, 14, 82, 84), and the control section (6); **characterized by**:
the acoustic wave generating section (8, 10, 78, 80), the detecting section (12, 14, 82, 84), and the conductive wires (4a-4h, 4z) being provided on the substrate (2) such that they are integrated therewith.

2. A display apparatus (1a-1d) having a contact detecting function as defined in Claim 1, wherein:
the acoustic wave generating section (8, 10, 78, 80) comprises a piezoelectric element (8, 10, 12, 14); and
the detecting section (12, 14, 82, 84) comprises a grating (78, 80, 82, 84).

3. A display apparatus (1a-1d) having a contact detecting function as defined in Claim 1, wherein:
the acoustic wave generating section (8, 10, 78, 80) comprises a piezoelectric element (8, 10, 12, 14); and
the detecting section (12, 14, 82, 84) comprises a pair of comb electrodes (52, 54, 56, 58).

4. A display apparatus (1a-1d) having a contact detecting function as defined in any one of Claim 1, Claim 2, and Claim 3, wherein:
the display section (3) is a field emission display.

5. A display apparatus (1a-1d) having a contact detecting function as defined in any one of Claim 1, Claim 2, and Claim 3, wherein:
the display section (3) is a vacuum fluorescent display.

6. A display apparatus (1a-1d) having a contact detecting function as defined in Claim 1, further comprising:
reflective arrays (18, 22, 26, 32) for causing the generated acoustic waves to propagate along the surface of the substrate (2).

7. A display apparatus (1a-1d) having a contact detecting function as defined in Claim 6, wherein:
the control section (6) inputs the electrical signals into the acoustic wave generating section (8, 10, 78, 80), and detects the contact position, based on the electrical detection signals received from the detecting section (12, 14, 82, 84).
